# EUROPÄISCHE PATENTSCHRIFT

(11) **EP 1 095 879 B1**
(45) Veröffentlichungstag und Bekanntmachung des Hinweises auf die Patenterteilung: **15.03.2006**
(21) Anmeldenummer: 00122886.5
(22) Anmeldetag: 20.10.2000
(51) Int. Cl.: B65G 47/252, B65B 35/16, B65B 35/24

(54) **Vorrichtung zum Handhaben von Beuteln**
Device for handling pouches
Appareil pour manipuler des sachets

(30) Priorität: 28.10.1999 DE 19952007
(43) Veröffentlichungstag der Anmeldung: 02.05.2001
(73) Patentinhaber: INDAG Gesellschaft für Industriebedarf mbH & Co. Betriebs KG, 69214 Eppelheim (DE)
(72) Erfinder: Wild, Hans-Peter, Dr., 6300 Zug (CH); Kraft, Eberhard, 74924 Neckarbischofsheim (DE)
(74) Vertreter: Grünecker, Kinkeldey, Stockmair & Schwanhäusser Anwaltssozietät

(56) Entgegenhaltungen:
- EP-A- 0 700 832
- DE-C- 406 807
- US-A- 3 191 748
- US-A- 4 800 703
- US-A- 5 768 856

## Beschreibung

Die Erfindung bezieht sich auf eine Vorrichtung zum Handhaben von Beuteln, insbesondere von Standbodenbeuteln.

Aus der US-A-3 191 748 ist eine Vorrichtung zum Fördern von nicht standfähigen Beuteln oder Packungen bekannt, die einen ersten Förderer, der die Beutel hängend, aufrecht und in einer einzigen Reihe transportiert enthält. Am Ende des ersten Förderers werden die Beutel in dieser Position einzeln in Fächer eines Förderrades eingelegt, das sich um eine horizontale Achse dreht. Bei der Umdrehung werden die Beutel von ihrer aufrechten in eine liegende Position verbracht. Der zweite Förderer befindet sich in der 3-Uhr- bzw. 9-Uhr-Stellung bezüglich des Förderrades und übernimmt die an dieser Stelle liegend ausgerichteten Beutel direkt vom Förderrad. Zum Übergeben der Beutel sind Finger oder Drücker vorgesehen. Beim Übergeben werden die Beutel gleichzeitig in einem Abteil auf dem zweiten Förderer gestapelt.

Die US-A-4 800 703 beschreibt einen horizontal arbeitenden Beutelpacker, mit dem wiederum nicht standfähige Beutel verpackt werden. In dieser Verpackungseinrichtung werden die Beutel liegend transportiert, wobei die Beutel durch Vakuumsauger gehandhabt werden.

Eine aus der US-PS 4 108 300 bekannte Vorrichtung dient zum Handhaben von kissenartig geformten, nicht standfähigen Beuteln, die aus zwei flachen Folien-Materialstücken bestehen, die übereinandergelegt und ringsum mit ihren Randkanten miteinander verschweißt sind. Die Beutel werden zunächst an drei Seiten verschweißt und durchlaufen in diesem Zustand hängend eine Befüll- und Verschließstation, in der die Beutel befüllt und die vierte Seite anschließend versiegelt wird. Dann werden die Klammern für die hängende Förderung gelöst und die Beutel fallen einfach unter Schwerkrafteinfluss auf den zweiten Förderer, der sie liegend weitertransportiert. Diese Art der Übergabe von hängender bzw. aufrechter Förderung in eine liegende Förderung ist jedoch allenfalls bei dieser Art Beuteln durchzuführen, da diese Beutel sich durch ihre Kissenform automatisch in der korrekten, liegenden Position auf dem Förderer ausrichten.

Die US-A-5 467 862 beschreibt eine Vorrichtung und ein Verfahren zum Erleichtem des Übergangs zwischen einem ersten, schrittweise arbeitenden Förderer und einem zweiten, kontinuierlich arbeitenden Förderer. Die Förderer sind zum Fördern von flachen, ebenen Gegenständen ausgelegt. Die Gegenstände werden vom Förderer einzeln und liegend angefördert und durch den Förderdruck, unterstützt durch einen auf der Oberseite der Gegenstände angreifenden Hilfsförderer, in Förderrichtung nacheinander in Abteile eines vertikal umlaufenden Übergabeförderers eingebracht. Der Übergabeförderer fördert die Gegenstände zum zweiten Förderer, der sie in Förderrichtung nacheinander aus dem Übergabeförderer herausholt. Auch auf dem zweiten Förderer werden die Gegenstände liegend transportiert. Der Übergabeförderer ist so manipulierbar, dass seine Geschwindigkeit am ersten Förderer variierbar ist, um unterschiedliche Abstände der angelieferten Gegenstände auszugleichen. Die Produktlinie, bestehend aus erstem Förderer, Übergabeförderer und zweitem Förderer kann verdoppelt oder vervielfacht werden.

Die US-A-5 768 856 beschreibt ein Verfahren und eine Vorrichtung zum Beladen einer Umverpackung mit einer Vielzahl von Einzelverpackungen. Die Verpackungen kommen liegend auf einem ersten Förderer an und werden einer Übergabeeinrichtung übergeben. Die Übergabeeinrichtung enthält ein vertikal umlaufendes Band mit Abteilen, die jeweils eine einzige Packung aufnehmen und eine vorbestimmte Anzahl von in Förderrichtung hintereinanderliegender Einzelverpackungen direkt in eine auf dem zweiten Förderer vorbeigeführte Umverpackung übergibt. Die vorbestimmte Anzahl von Einzelverpackungen kann jedoch auch zunächst an einen Greifer übergeben werden, der sie entweder direkt in die Umverpackung einlädt oder an einen Halter übergibt, der eine Anzahl der Einzelpackungen ansammelt und diese dann gemeinsam in eine größere Umverpackung einlädt.

Standboden-Beutel bestehen aus Folienmaterialstücken, die nur an drei Seiten, d.h. die beiden Seitenkanten und die Kanten der Verschlussöffnung direkt miteinander verschweißt sind, während zwischen die beiden restlichen Randkanten ein Standboden eingesetzt oder ausgebildet ist. Diese Standbeutel wurden bisher nur stehend transportiert. Zur Übergabe aus der stehenden in eine liegende Position ist es weiterhin nicht möglich, die Beutel einfach fallenzulassen, da sie dann entweder durch ihren Standboden in die verschiedensten Richtungen abgelenkt würden oder einfach stehend weitertransportiert würden.

Der Erfindung liegt somit die Aufgabe zugrunde, eine Vorrichtung bereitzustellen, die auch bei hohem Förderdurchsatz eine sanfte und kontrollierte Überführung von Beuteln aus der aufrechten in eine liegende Position gestattet

Die Aufgabe wird durch die im Anspruch 1 angegebenen Merkmale gelöst.

Durch die erfindungsgemäße Ausgestaltung ist es möglich, auf konstruktiv einfache Weise den Durchsatz an geförderten Beuteln durch eine Vorrichtung wesentlich zu erhöhen, ohne beispielsweise empfindliche Beutel zu stark mechanisch zu belasten. Die erfindungsgemäße Vorrichtung bietet die Möglichkeit, die Anzahl der in einer Reihe geförderten Beutel beliebig zu verändem, um sie dem geforderten Durchsatz anpassen zu können, ohne dass beispielsweise die Geschwindigkeit der gesamten Vorrichtung und demzufolge die Belastungen der einzelnen Beutel erhöht werden muss.

Durch die Erfindung wird eine Vorrichtung geschaffen, mit der insbesondere Standboden-Beutel sicher und korrekt in eine genau definierte, liegende Förderposition gebracht werden können. Aber auch andere Beutelformen können mit der erfindungsgemäßen Vorrichtung gehandhabt werden, insbesondere dann, wenn es auf eine sanfte Behandlung (beispielsweise wegen eines empfindlichen Inhalts) ankommt, die man nicht einfach fallen lassen kann.

Vorteilhafte Weiterbildungen der Erfindung sind den Unteransprüchen zu entnehmen.

Ein Ausführungsbeispiel der Erfindung wird nachfolgend anhand der Zeichnungen näher erläutert. Es zeigen:
- Fig. 1: eine schematische Darstellung der erfindungsgemäßen Vorrichtung in Seitenansicht,
- Fig. 2: eine schematische Seitenansicht der Übertragungseinrichtung der Vorrichtung nach Fig. 1, und
- Fig. 3: eine schematische Draufsicht der Übertragungseinrichtung nach Fig. 1.

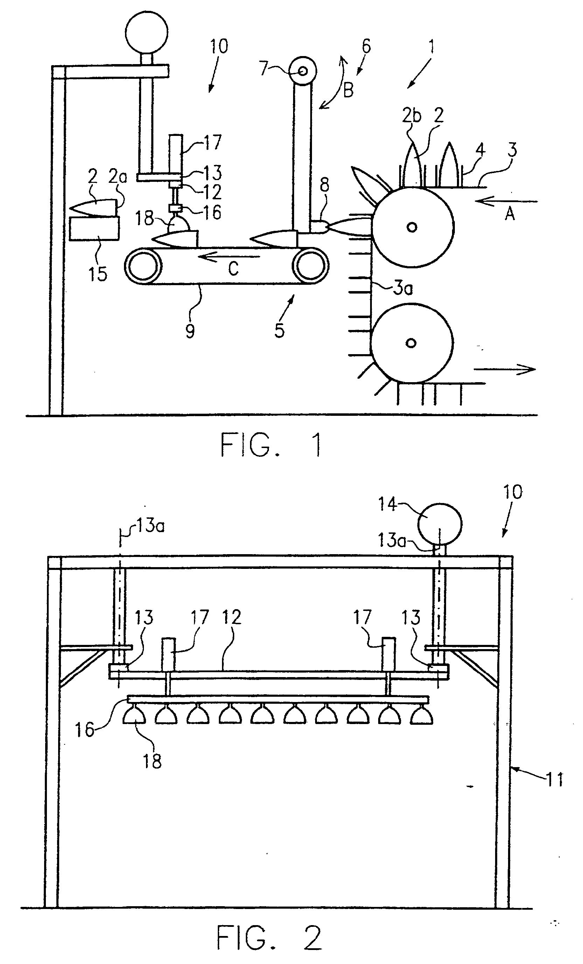

Fig. 1 zeigt in schematischer Darstellung eine Vorrichtung 1 zum Handhaben von Beuteln 2, wobei die Beutel 2 als Standboden-Beutel dargestellt sind, die aus zwei, an zwei gegenüberliegenden Seiten miteinander verschweißte Folienstücke, einem an einer der verbliebenen Seiten eingesetzten oder einstückig angeformten Standboden 2a sowie einen die letzte Seite, die Einfüllöffnung, verschließenden Siegelrand 2b aufweisen. Die Beutel 2 werden durch einen ersten Förderer 3 antransportiert. Der erste Förderer 3 ist bevorzugt derjenige Förderer, der die Beutel 2 nach dem Befüllen mit heißen Getränken, und dem Verschließen durch den Siegelrand 2b durch eine nicht dargestellte Kühleinrichtung, beispielsweise ein Wasserbad, transportiert. Der Förderer 3 ist mit Aufnahmehalterungen 4 versehen, von denen nur einige dargestellt sind, und die die Beutel 2 in einer aufrechten, bodenunterstützten Förderposition halten. An der Umlenkstelle des Förderbandes 3 ist ein senkrechter Bereich 3a vorgesehen, den das Förderband 3 in Richtung des Pfeiles A von oben nach unten durchläuft, so dass die Beutel 2 im senkrechten Bereich 3a eine im wesentlichen horizontale Position im Raum einnehmen, die etwa derjenigen Ausrichtung entspricht, in der die Beutel 2 liegend transportiert werden.

Dem senkrechten Übergabebereich 3a ist eine Übergabevorrichtung 5 zugeordnet, die einen Greifer 6 mit einer um eine horizontale Achse 7 in Richtung des Doppelpfeiles B schwenkbaren Klammer 8 enthält. Die Klammer 8 ist so ausgebildet und angeordnet, dass sie in der Lage ist, den Beutel 2 an seinem Siegelrand 2b zu ergreifen und in einer im wesentlichen geradlinigen Bewegung (großer Abstand zwischen Klammer 8 und Achse 7) aus ihren jeweiligen Aufnahmeeinrichtungen 4 horizontal herauszuziehen und auf einen Übergabeförderer 9 abzulegen.

Im beschriebenen Ausführungsbeispiel ist der erste Förderer 3 in der Lage quer zur Förderrichtung A eine Mehrzahl von Beuteln 2 nebeneinander zu fördern. Demgemäss enthält die Greifeinrichtung 6 eine entsprechende Anzahl Klammern 8, so dass auf dem Übergabeförderer 9 die Mehrzahl der Beutel 2 senkrecht zur Ebene der Fig. 1.abgelegt wird. Der Übergabeförderer 9 fördert die Beutel anschließend in Richtung des Pfeiles C aus dem Bereich der Greifeinrichtung 6 heraus und in den Bereich einer Übertragungseinrichtung 10 hinein.

Ist der erste Förderer 3 zum Fördern jeweils nur in Förderrichtung einzeln hintereinanderliegender Beutel geeignet, so sollte sich der Übergabeförderer zweckmäßigerweise in Richtung senkrecht zur Zeichnungsebene der Fig. 1 bewegen, so dass auf diese Weise eine Beutelreihe gebildet wird.

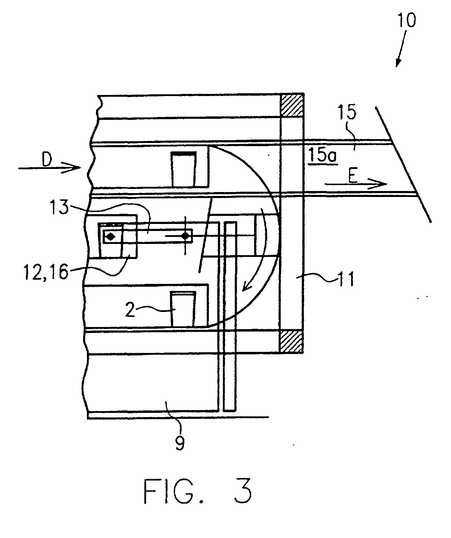

Die Übertragungseinrichtung 10 ist in den Fig. 2 und 3 näher dargestellt Die Übertragungseinrichtung 10 enthält einen an einem Rahmen 11 aufgehängten langgestreckten, horizontalen Träger 12, der über zwei gleich lange Kurbeln 13 um zwei beabstandete, senkrechte Achsen 13a durch einen Motor 14 in der in Fig. 3 gezeichneten Weise in Richtung des Pfeiles D bewegt wird. Beim Durchlaufen der Bewegung in Richtung des Pfeiles D wird der Träger 12 zwischen dem Übergabeförderer 9 und einem zweiten Förderer für Liegendförderung der Beutel 2 im wesentlichen parallel verschoben und etwas in Förderrichtung E des zweiten Förderers verschoben. Der zweite Förderer 15 ist ein übliches, endlos umlaufendes Förderband mit einer horizontalen Förderfläche 15a für Liegendförderung.

Am Träger 12 ist ein Montageträger 16 über Zylinder-Kolbeneinheiten 17 höhenverstellbar aber ansonsten so befestigt, dass der Montageträger 16 dem Träger 12 in seiner Bewegung entlang des Pfeiles E exakt folgt. Am Montageträger 16 sind eine Vielzahl von Halteeinrichtungen 18 befestigt, die im dargestellten Ausführungsbeispiel als Sauger ausgebildet sind, deren Vakuumversorgung nicht näher dargestellt ist. Es ist jeweils ein Sauger 18 für jeden Beutel einer Reihe vorhanden.

Die erfindungsgemäße Vorrichtung arbeitet wie folgt.

Die Beutel 2 kommen in Fig. 1 nebeneinanderliegend und in Förderrichtung A in Reihe hintereinander folgend auf dem ersten Förderer 3 an und werden im Übergabebereich 3a im wesentlichen horizontal ausgerichtet Die Vielzahl nebeneinanderliegender Klammern 8 der Greifeinrichtung 6 erfasst die Beutel, zieht sie aus ihren Aufnahmeeinrichtungen 4 und legt sie in einer Reihe auf dem Übergabeförderer 9 ab. Dieser transportiert die Reihe der Beutel aus dem Bereich der Greifeinrichtung 6 in den Bereich der Übertragungseinrichtung 10 bis unter die Sauger 18. Die Sauger 18 werden durch die Kolben-Zylinder-Einheiten 17 auf die Beutel abgesenkt, das Vakuum wird angelegt, die Beutel gegebenenfalls angehoben und der Träger 12 um die Achsen 13a drehend angetrieben, so dass er die in Fig. 3 schematisch dargestellten Stellungen nacheinander durchläuft, in denen die Reihe jedoch immer die gleiche Ausrichtung beibehält, d.h. parallel zur Förderrichtung E des zweiten Förderers 15 und mit ihren Standböden zum ersten Förderer 3 weisend angeordnet. Befindet sich der Träger 12 über dem zweiten Förderer 15 so wird der Montageträger 16 mit den Saugern 18 abgesenkt während sich der Montageträger 16 und der Träger 12 ein kurzes Stück parallel zur Förderrichtung E des zweiten Förderers 15 bewegen. Das Vakuum wird beendet und die Beutel werden auf den zweiten Förderer 15 übertragen, der sie zur Weiterverarbeitung, beispielsweise zu einer Trinkhalmanbringeinrichtung und/oder zu einer Verpackungseinrichtung bringt. Der Träger 12 mit dem Montageträger 16 kehrt zurück zum Übergabeförderer 9, nimmt dort die nächste Reihe der Beutel auf und transportiert auch diese Reihe auf den zweiten Förderer 15. Dabei werden die Länge der Reihe und die Fördergeschwindigkeiten so aufeinander abgestimmt, dass sich auf dem zweiten Förderer 15 die aufeinawderfolgend übertragenen Reihen möglichst ohne Zwischenraum aneinander anschließen.

In Abwandlung des beschriebenen und gezeichneten Ausführungsbeispieles kann die Greifeinrichtung eine Vielzahl in einer einzigen Richtung rotierender Klammern aufweisen. Auch eine anders ausgestaltete bzw. angetriebene Greifeinrichtung ist denkbar. Weiterhin kann die Halteeinrichtung für die Beutel statt als Saugnapf ebenfalls als Klammer oder dgl. ausgebildet sein. Die mit dem bewegbaren Träger ausgestattete Übertragungseinrichtung kann auch an anderen Stellen im Förderweg von Beuteln angeordnet sein.

## Patentansprüche

1. Vorrichtung zum Handhaben von Beuteln (2), insbesondere von Standbodenbeuteln, mit
- einem ersten Förderer (3), der zum Fördern einer Vielzahl quer zur Förderrichtung (A) nebeneinander angeordneter Beutel (2) ausgelegt ist, und auf dem die Beutel aufrecht gefördert werden,
- einem zweiten Förderer (15), auf dem die Beutel liegend in Reihe gefördert werden, und
- einer Übergabeeinrichtung (5), die zwischen dem ersten und dem zweiten Förderer (3,15) vorgesehen ist,
- wobei die Übergabeeinrichtung (5) enthält:
- einen Übergabebereich (3a) am ersten Förderer (3), in dem die Beutel (2) im Raum im Wesentlichen horizontal ausrichtbar sind,
- eine Greifeinrichtung (6) zum gleichzeitigen Abziehen der quer zur Förderrichtung (A) nebeneinander angeordneten Beutel (2) vom Übergabebereich (3a) am ersten Förderer (3) und zum Ausbilden einer Zwischenreihe durch Ablegen der Beutel (2) auf einer Ablagefläche (9) in einer im Wesentlichen geradlinigen Bewegung, wobei die Zwischenreihe die quer zur Förderrichtung (A) nebeneinander angeordneten Beutel (2) enthält, und
- eine Übertragungseinrichtung (10) zum gleichzeitigen Übertragen aller Beutel (2) der Zwischenreihe von der Ablagefläche (9) auf den zweiten Förderer (15).

2. Vorrichtung nach Anspruch 1, **dadurch gekennzeichnet, dass** der erste Förderer (3) ein Förderband mit Aufnahmeeinrichtungen (4) zum stehenden Fördern der Beutel (2) aufweist, das im Übergabebereich (3a) vertikal ausgerichtet ist.

3. Vorrichtung nach Anspruch 1 oder 2, **dadurch gekennzeichnet, dass** der erste Förderer (3) einer einer Kühleinrichtung zugeordneter Förderer ist.

4. Vorrichtung nach einem der Ansprüche 1 bis 3, **dadurch gekennzeichnet, dass** die Greifeinrichtung (6) um eine Achse (7) schwenkbare Klammern (8) enthält.

5. Vorrichtung nach einem der Ansprüche 1 bis 4, **dadurch gekennzeichnet, dass** die Übertragungseinrichtung (10) einen langgestreckten, bewegbaren Träger (12, 16) und eine der Anzahl der Beutel (2) einer Reihe entsprechende Anzahl Halteeinrichtungen (18) für die Beutel (2) aufweist.

6. Vorrichtung nach Anspruch 5, **dadurch gekennzeichnet, dass** die Halteeinrichtung Saugeinrichtungen (18) sind.

7. Vorrichtung nach Anspruch 5 oder 6, **dadurch gekennzeichnet, dass** der Träger (12, 16) mittels Kurbeln (13) um zwei Achsen (13a, 13b) in einer geschlossenen Bahn mit gleichbleibender Längsausrichtung zwischen der Ablagefläche (9) und dem zweiten Förderer (15) bewegbar ist.

8. Vorrichtung nach Anspruch 7, **dadurch gekennzeichnet, dass** die Bewegungsrichtung (D) des Trägers (12, 16) über dem zweiten Förderer (15) im wesentlichen der Bewegungsrichtung (E) des zweiten Förderers (15) entspricht.

9. Vorrichtung nach einem der Ansprüche 5 bis 8, **dadurch gekennzeichnet dass** die Halteeinrichtungen (18) höhenverstellbar sind.

10. Vorrichtung nach einem der Ansprüche 1 bis 9, **dadurch gekennzeichnet, dass** die Ablagefläche durch einen Übergabeförderer (9) gebildet ist.

## Claims

1. An apparatus for handling bags (2), particularly stand up bags, comprising:
- a first conveyor (3) which is designed for conveying a plurality of bags (2) arranged side by side in a direction transverse to the conveying direction (A), and on which the bags are conveyed in an upright position,
- a second conveyor (15) on which the bags are conveyed in a lying position in a row, and
- a transfer device (5) provided between the first and second conveyor (3, 15),
- the transfer device (5) comprising:
- a transfer portion (3a) provided on said first conveyor, in which the bags (2) can be oriented in a substantially horizontal direction in space.
- a gripper (6) for simultaneously withdrawing the bags (2) arranged side by side in a direction transverse to the conveying direction (A), from the transfer portion (3a) on the first conveyor (3) and for forming an intermediate row by depositing the bags (2) on a depositing surface (9) in a substantially straight movement, the intermediate row containing the bags (2) arranged side by side in a direction transverse to the conveying direction (A), and
- a delivery means (10) for simultaneously delivering all bags (2) of the intermediate row from the depositing surface (9) to the second conveyor (15).

2. The apparatus according to claim 1, **characterized in that** the first conveyor (3) comprises a conveyor belt with accommodating means (4) for conveying the bags (2) in an upright position, said conveyor belt being oriented in a vertical direction in the transfer portion (3a).

3. The apparatus according to claim 1 or 2, **characterized in that** said first conveyor (3) is a conveyor assigned to a cooling device.

4. The apparatus according to any one of claims 1 to 3, **characterized in that** the gripper (6) contains clamps (8) that are pivotable about an axis (7).

5. The apparatus according to any one of claims 1 to 4, **characterized in that** the delivery means (10) comprises an elongated movable carrier (12,16) and a number of holding means (18) for the bags (2), said number of holding means (18) corresponding to the number of bags (2) of a row.

6. The apparatus according to claim 5, **characterized in that** said holding means are suction means (18).

7. The apparatus according to claim 5 or 6, **characterized in that** said carrier (12, 16) is movable by means of cranks (13) around two axes (13a, 13b) in a closed path of a constant longitudinal orientation between the depositing surface (9) and the second conveyor (15).

8. The apparatus according to claim 7, **characterized in that** the direction of movement (D) of the carrier (12, 16) above the second conveyor (15) substantially corresponds to the direction of movement (E) of the second conveyor (15).

9. The apparatus according to any one of claims 5 to 8, **characterized in that** the holding means (18) are adjustable in height.

10. The apparatus according to any one of claims 1 to 9, **characterized in that** the depositing surface is formed by a transfer conveyor (9).

## Revendications

1. Dispositif pour manipuler des sachets (2), en particulier des sachets à fond plat, comprenant
- un premier transporteur (3), qui est conçu pour le transport d'une pluralité de sachets (2) disposés les uns contre les autres transversalement au sens de transport (A), et sur lequel les sachets sont transportés verticalement,
- un deuxième transporteur (15), sur lequel les sachets sont transportés allongés en rangée, et
- un dispositif de transfert (5) qui est prévu entre le premier et le second transporteurs (3, 15),
- le dispositif de transfert (5) contenant :
- une zone de transfert (3a) sur le premier transporteur (3), dans laquelle les sachets (2) peuvent être orientés sensiblement horizontalement dans l'espace,
- un dispositif de préhension (6) pour l'enlèvement simultané des sachets (2) disposés les uns à coté des autres transversalement au sens de transport (A) de la zone de transfert (3a) sur le premier transporteur (3) et pour la réalisation d'une rangée intermédiaire par la dépose des sachets (2) sur une surface de dépose (9) dans un mouvement sensiblement rectiligne, la rangée intermédiaire contenant les sachets (2) disposés les uns à côté des autres transversalement au sens de transport (A), et
- un dispositif de transmission (10) pour la transmission simultanée de tous les sachets (2) de la rangée intermédiaire de la surface de dépose au second transporteur (15).

2. Dispositif selon la revendication 1, **caractérisé en ce que** le premier transporteur (3) présente une bande transporteuse avec des dispositifs de préhension (4) pour le transport vertical des sachets (2), laquelle est orientée verticalement dans la zone de transfert (3a).

3. Dispositif selon la revendication 1 ou 2, **caractérisé en ce que** le premier transporteur (3) est un transporteur attribué à un dispositif de refroidissement.

4. Dispositif selon l'une quelconque des revendications 1 à 3, **caractérisé en ce que** le dispositif de préhension (6) contient des pinces (8) pouvant pivoter autour d'un axe (7).

5. Dispositif selon l'une quelconque des revendications 1 à 4, **caractérisé en ce que** le dispositif de transmission (10) présente un support (12, 16) déplaçable et étiré en longueur et un nombre, correspondant au nombre des sachets (2) d'une rangée, de dispositifs de retenue (18) pour les sachets (2).

6. Dispositif selon la revendication 5, **caractérisé en ce que** les dispositifs de retenue sont des systèmes d'aspiration (18).

7. Dispositif selon la revendication 5 ou 6, **caractérisé en ce que** le support (12, 16) peut être déplacé au moyen de manivelles (13) autour de deux axes (13a, 13b) dans une trajectoire fermée avec une orientation longitudinale uniforme entre la surface de dépose (9) et le second transporteur (15).

8. Dispositif selon la revendication 7, **caractérisé en ce que** la direction de déplacement (D) du support (12, 16) au moyen du second transporteur (15) correspond sensiblement au sens de déplacement (E) du second transporteur (15).

9. Dispositif selon l'une quelconque des revendications 5 à 8, **caractérisé en ce que** les dispositifs de retenue (18) sont réglables en hauteur.

10. Dispositif selon l'une quelconque des revendications 1 à 9, **caractérisé en ce que** la surface de dépose est formée par un transporteur de transfert (9).
